# EUROPÄISCHE PATENTANMELDUNG

(11) **EP 1 669 903 A2**
(43) Veröffentlichungstag der Anmeldung: **14.06.2006**
(21) Anmeldenummer: 05023412.9
(22) Anmeldetag: 26.10.2005
(51) Int. Cl.: G06F 21/00

(54) **Mobiles elektronisches Gerät mit Zugriffsschutz**

(30) Priorität: 10.12.2004 DE 102004059637
(71) Anmelder: Fujitsu Siemens Computers GmbH, 80807 München (DE)
(72) Erfinder: Filimon, Diana, 86368 Gersthofen (DE); Gerstner, Robert, 86438 Kissing (DE)
(74) Vertreter: Epping - Hermann - Fischer

(57) **Zusammenfassung**

Die Erfindung beschreibt ein mobiles elektronisches Gerät (1) mit Zugriffskontrolle (2). Dabei erfolgt zumindest eine Teil der Überprüfung der Zugangsberechtigung durch ein Zusatzgerät (7). Zugriffe auf geschützte Bereiche (4) des mobilen Gerätes (1) sind nur nach erfolgreicher Berechtigungsprüfung und nur für einen vorbestimmten Zeitraum möglich. Nach Ablauf dieser Zeit muss das mobile Gerät (1) eine erneute Prüfung durch das Zusatzgerät (7) vornehmen lassen. Durch die Erfindung wird der Zugriffs- und Diebstahlschutz für das mobile elektronische Gerät (1) dadurch erhöht, das sein Besitz allein den Zugriff auf geschützte Teile (4) des Geräts (1) nur für einen vorbestimmten Zeitraum ermöglicht.

## Beschreibung

Die Erfindung betrifft ein mobiles elektronisches Gerät mit einem Zugriffsschutz zur zumindest teilweisen Sperre des Geräts, der dadurch gebildet ist, dass nach der Überprüfung einer Berechtigung eines Benutzers der Zugriff auf vorbestimmte Teile des Gerätes für eine vorbestimmte Zeit freigeschaltet wird und nach Ablauf der vorbestimmten Zeit der Zugriff auf vorbestimmte Teile des Gerätes automatisch gesperrt wird.

Durch die zunehmende Verbreitung und den Einsatz mobiler elektronischer Geräte gewinnt auch ein Schutz solcher Geräte vor Diebstahl und unberechtigtem Zugriff an Bedeutung. Daher werden solche Geräte in der Regel mit einem Passwortschutz versehen, der das Gerät für einen unberechtigten Nutzer unbrauchbar macht. Die Vergabe, das Merken und das Eingeben eines Passwortes durch den Benutzer ist jedoch relativ unkomfortabel und gewährt in einigen Situationen nur ungenügenden Schutz. Kurze oder einfach zu erratende Passworte stellen keinen ausreichenden Schutz vor dem Zugriff durch Unbefugte dar. Längere und schwer zu ermittelnde Passworte sind für den Benutzer jedoch nur schwer zu merken.

Als Alternative stehen biometrische Schutzverfahren zur Verfügung. Dabei werden biometrische Merkmale des Nutzers, z.B. sein Fingerabdruck eingesetzt, um die Identität des Nutzers zu überprüfen. Die für ein solches Verfahren notwendigen Sensoren sind jedoch teuer in der Herstellung. Zudem ist die Erkennungssicherheit solcher Verfahren noch relativ gering. Dies kann einerseits dazu führen, dass unberechtigte Nutzer unberechtigterweise zur Benutzung des Gerätes zugelassen werden oder andererseits berechtigte Benutzer von der Benutzung des Gerätes abgehalten werden.

Daher besteht die Aufgabe der Erfindung darin, den Zugriffsschutz gegenüber der einfachen Passworteingabe zu verbessern, ohne dass es dadurch zu einem erheblichen Komfortverlust für den Nutzer kommt. Des weiteren soll der derart gestaltete Zugriffsschutz keine Erweiterung der Hardware des mobilen Gerätes erfordern.

Die Aufgabe wird erfindungsgemäß durch ein Gerät der eingangs beschriebenen Art gelöst, dass dadurch gekennzeichnet ist, dass die Überprüfung der Berechtigung eines Benutzers unter Zusammenwirkung des mobilen Geräts mit einem Zusatzgerät erfolgt.

Erst wenn eine solche Überprüfung der Zugangberechtigung des Benutzers durch Zusammenwirken mit dem Zusatzgerät erfolgreich war, erlaubt das mobile Gerät den Zugriff auf geschützte Bereiche. Ein solcher Zugriff ist dabei nur für eine vorbestimmte Zeitspanne erlaubt. Spätestens wenn, die vorbestimmte Zeitspanne abgelaufen ist, muss das mobile Gerät zur erneuten Überprüfung der Zugangsberechtigung wiederum mit dem Zusatzgerät zusammenwirken.

Durch die Erfindung wird der Zugriffsschutz auf das mobile Gerät dadurch erhöht, dass ein Zugriff auf geschützte Bereiche des mobilen Gerätes nur für denjenigen möglich ist, der Zugang zu dem Zusatzgerät besitzt. Der Besitz des mobilen Gerätes alleine reicht nicht mehr zum Zugriff auf dessen geschützten Teil nach Ablauf der vorbestimmten Zeitspanne aus.

Die übliche Passworteingabe kann neben den erfindungsgemäßen Schutz treten. Während die Passworteingabe an dem mobilen elektronischen Gerät vor allem der Datensicherheit dient, ist durch den erfindungsgemäßen Schutzmechanismus ein Diebstahlschutz gegeben. Es macht keinen Sinn ein Gerät zu entwenden, dessen Passwortschutz beispielsweise durch eine Neuinstallation der Software umgangen werden kann, dass aber nach Ablauf der vorbestimmten Zeit unabhängig von der installierten Software ohne das Zusatzgerät unbrauchbar wird.

Vorteilhafterweise handelt es sich bei dem Zusatzgerät um ein stationäres Gerät. Ein solches Gerät ist dabei üblicherweise in einem geschlossenen Bereich, beispielsweise in einem Büro, aufgestellt. Dies beschränkt den Zugriff auf ein solches Zusatzgerät auf einen überschaubaren Personenkreis.

Die Freigabe der Zugangsberechtigung kann durch Übermittlung eines Freischaltkodes von dem Zusatzgerät zu dem mobilen Gerät erfolgen. Der übermittelte Freischaltkode ersetzt dabei vorzugsweise das herkömmliche Passwort. Da ein solcher Kode typischerweise auf elektronischem Wege übermittelt wird, können die eingesetzten Kodes erheblich länger gewählt werden als dies bei einem manuell eingegebenen Passwort üblich wäre. Ein Erraten eines solchen Freischaltkodes wird damit erheblich erschwert.

Die Sicherheit des vergebenen Freischaltkodes kann weiter erhöht werden, wenn der Freischaltkode mit einer eindeutige Gerätekennung (UUID), wie sie bei mobilen Geräten üblich ist, verschlüsselt wird. Dadurch kann ein eventuell mit Hilfe eines weiteren mobilen Gerätes ermittelter Freischaltkode nicht auf einem anderen mobilen Gerät eingesetzt werden.

Weitere vorteilhafte Einzelheiten und Ausgestaltungen der Erfindung sind in den Unteransprüchen angegeben.

Die Erfindung wird nachfolgend an zwei Ausführungsbeispielen anhand der Zeichnungen erläutert. In den Zeichnungen zeigen:
Figur 1 eine schematische Darstellung eines erfindungsgemäßen mobilen elektronischen Gerätes mit angeschlossenem Zusatzgerät,
Figur 2 ein Ablaufdiagramm, welches das Funktionieren des Zugriffsschutzes erläutert,
Figur 3 eine detaillierte schematische Darstellung des erfindungsgemäßen mobilen elektronischen Gerätes in einer ersten Ausführung,
Figur 4 eine detaillierte schematische Darstellung des erfindungsgemäßen mobilen elektronischen Gerätes in einer zweiten Ausführung.

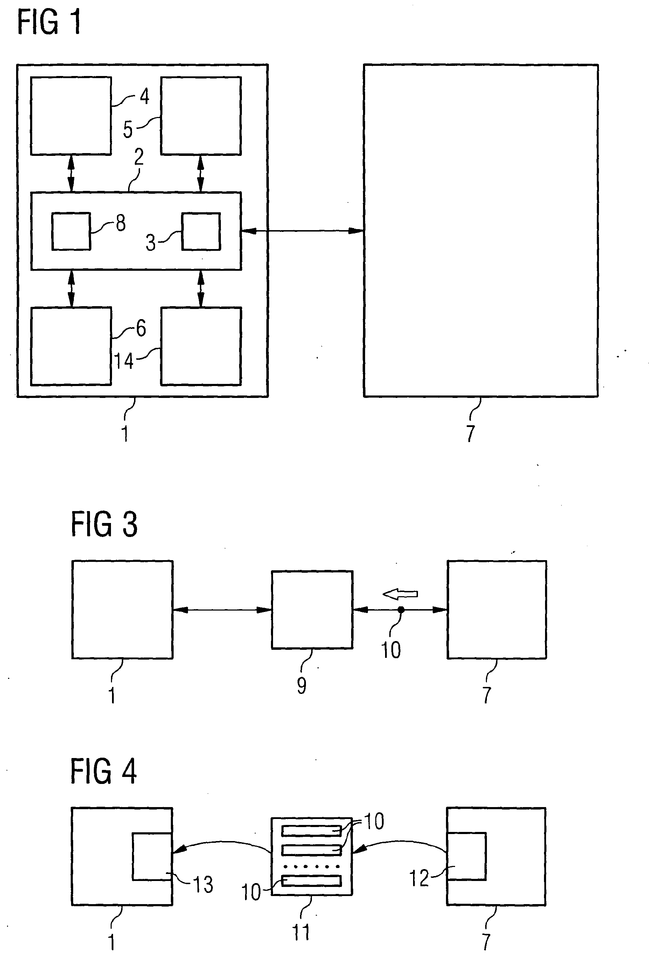

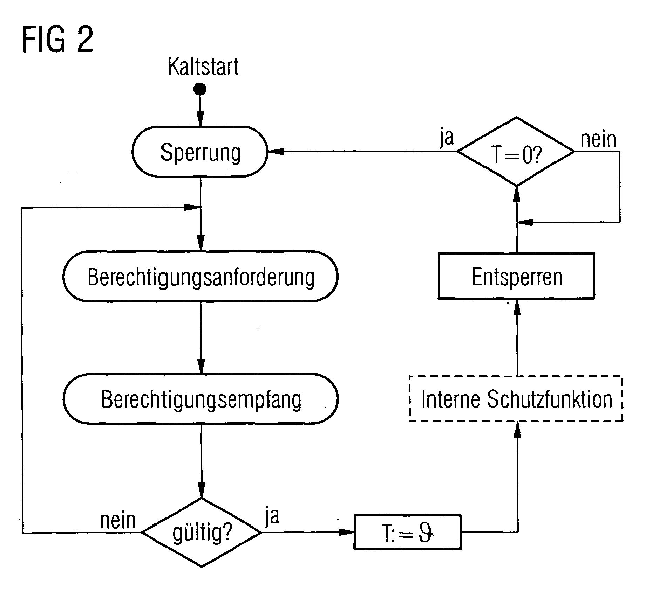

Die schematische Darstellung der Figur 1 und das Ablaufdiagram in Figur 2 dienen zur Erläuterung des Zusammenwirkens der Komponenten des erfindungsgemäßen elektronischen Gerätes mit dem Zusatzgerät. Das elektronische Gerät 1 enthält ein Zugriffskontrollmittel 2 mit eingebauter Zeituhr 3, einen geschützten Bereich 4, einen ungeschützten Bereich 5, Mittel zur Ein- und Ausgabe 6 sowie eine eindeutige Gerätekennung 14. Ein Zusatzgerät 7 kann mit dem Zugriffskontrollmittel 2 zusammenwirken.

Beim erstmaligen Start oder Kaltstart des mobilen elektronischen Gerätes 1, wie zum Beispiel bei der ersten Inbetriebnahme nach der Installation eines neuen Betriebssystems, sperrt das Zugriffskontrollmittel 2 den Zugriff auf den geschützten Bereich 4. Zugriffe auf den ungeschützten Bereich 5 sind auch in diesem Zustand möglich. Selbstverständlich ist auch eine Konfiguration möglich, bei der sich der geschützte Bereich auf das gesamte Gerät erstreckt. Beim Versuch des Zugriffs auf den geschützten Bereich 4 fordert das mobile elektronische Gerät 1 eine Überprüfung der Benutzerberechtigung an. Dies kann beispielsweise durch das Anzeigen einer entsprechenden Aufforderung auf dem Bildschirm 6 oder das Aussenden eines Aufforderungssignals an das Zusatzgerät 7 geschehen. Reagiert das Zusatzgerät 7 auf Veranlassung des Benutzers oder in selbsttätiger Beantwortung des Aufforderungssignals durch Aussenden einer Bestätigung für den Zugriff, überprüft das Zugriffskontrollmittel 2 des mobilen Gerätes 1 eine übermittelte Bestätigung auf ihre Gültigkeit. Dies kann zum Beispiel durch die Überprüfung der Identität des Zusatzgerätes 7 erfolgen. Im Falle einer negativen Überprüfung fordert das mobile Gerät 1 zur erneuten Prüfung der Benutzerberechtigung auf. Im Falle einer positiven Überprüfung wird eine Zeitschaltuhr 3 auf eine vorbestimmte Zeit eingestellt, zu der spätestens eine erneute Überprüfung der Benutzerkennung stattfinden muss. Im Falle des Vorhandenseins eines weiteren Schutzfunktion 8, wie zum Beispiel eines eingebauten Passwortschutzes des mobilen Gerätes, wird die Kontrolle nun an diese weitere Schutzfunktion 8 übertragen. Autorisiert sich der Benutzer auch gegenüber der weiteren Schutzfunktion 8, zum Beispiel durch Eingabe des richtigen Passwortes, hebt das Zugriffskontrollmittel 2 die Sperre des geschützten Bereiches 4 auf.

In diesem Zustand ist das mobile elektronische Gerät 1 voll einsatzbereit, d.h. ein Benutzer kann es in vollem Umfange nutzen. Eine geräte-interne Schutzfunktionen 8 kann in diesem Zustand weiter wie gewohnt benutzt werden, d.h. ein Benutzer kann das mobile Gerät 1 beispielsweise durch Vergabe eines Passwortes vor unberechtigtem Zugriff schützen. Zum erneuten Zugriff auf das mobile elektronische Gerät 1, zum Beispiel beim Durchführen eines Warmstarts, muss dieser interne Schutz 8 dann wieder überwunden werden, beispielsweise durch die Eingabe eines Passwortes. Eine erneute Überprüfung der Benutzerberechtigung durch das Zusatzgerät 7 ist dabei nicht erforderlich, sofern die vorbestimmte Zeit, die in der Zeituhr 3 für die erneute Überprüfung gespeichert ist, noch nicht erreicht ist.

Ist der in der Zeituhr 3 eingestellte Zeitpunkt zur erneuten Überprüfung der Zugangsberechtigung erreicht, sperrt das Zugriffskontrollmittel 2 den geschützten Bereich 4 vor weiterem Zugriff. Der Benutzer des elektronischen Gerätes 1 wird hierauf entweder durch eine Aufforderung zur erneuten Überprüfung der Benutzerberechtigung oder durch einen vorsorglichen Warnhinweis über den Bildschirm 6 aufmerksam gemacht. Selbstverständlich ist auch ein vorzeitiges Zurücksetzen der Zeituhr 3 auf die vorbestimmte Zeitspanne durch eine vor Ablauf der vorbestimmten Zeit durchgeführten Überprüfung der Benutzerberechtigung möglich. Des weiteren kann der geschützte Bereich 4 des mobilen Geräts 1 auf Anforderung des Benutzers schon vor Ablauf der vorbestimmten Zeit wieder gesperrt werden.

Die Figur 3 zeigt ein erstes detailliertes Ausführungsbeispiel eines erfindungsgemäßen mobilen elektronischen Gerätes 1, dessen interne Komponenten mit denen der Figur 1 übereinstimmen. Das elektronische Gerät 1 ist mit einer Dockingstation 9 verbunden. Die Dockingstation 9 ist mit einem Zusatzgerät 7, im Ausführungsbeispiel einem stationären Computer, verbunden. Das Einsetzen des mobilen elektronischen Gerätes 1 in die Dockingstation 9 wird durch das Gerät 1 erkannt. Das Zugriffskontrollmittel 2 des mobilen elektronischen Gerätes 1 fordert daraufhin einen Freischaltkode 10 vom Zusatzgerät 7 an. Das Zusatzgerät 7 überprüft die Identität des anfordernden mobilen elektronischen Gerätes 1. Wird dieses Gerät 1 als berechtigt angesehen einen Freischaltkode anzufordern, wird anschließend ein gültiger Freischaltkode 10 zur Dockingstation 9 übermittelt. Das Zugriffskontrollmittel 2 des mobilen elektronischen Gerätes 1 empfängt den Freischaltkode 10 von der Dockingstation 9. Der empfangene Freischaltkode 10 wird auf seine Richtigkeit überprüft. Bei Gültigkeit des empfangenen Kodes 10 wird eine interne Zeituhr 3 auf eine vorbestimmte Zeit eingestellt. Im Falle des Vorhandenseins einer geräte-internen Schutzfunktion 8 wird diese wie oben beschrieben abgefragt. Hiernach werden alle zukünftigen Zugriffe auf den geschützten Bereich 4 des Gerätes 1 zugelassen, bis der eingestellte Zeitpunkt der Zeituhr 3 erreicht ist oder der Benutzer das mobile Gerät selbst sperrt. Spätestens nach Ablauf des vorbestimmten Zeitraumes werden alle Zugriffe auf den geschützten Bereich 4 des mobilen elektronischen Gerätes 1 wieder verweigert. Stattdessen wird eine Warnmeldung auf dem Bildschirm 6 des mobilen elektronischen Gerätes angezeigt. Diese Meldung fordert zur erneuten Überprüfung der Zugangsberechtigung durch das Zusatzgerät 7 auf. Wird das Gerät 1 vor Ablauf der vorbestimmten Zeit erneut in die Dockingstation 9 eingesetzt, wird automatisch ein neuer Freischaltkode 10 von dem Zusatzgerät 7 angefordert. Wird daraufhin ein gültiger Freischaltkode 10 übermittelt, wird die Zeituhr 3 wiederum auf die vorbestimmte Zeitspanne zurückgesetzt.

Eine Anordnung bestehend aus einem stationären Computer 7, einer Dockingstation 9 und einem mobilen elektronischen Gerät 1 wird bereits häufig verwendet. Dabei dient die Dockingstation 9 in der Regel zum Synchronisieren auf dem mobilen elektronischen Gerät 1 enthaltener Daten mit dem angeschlossenen stationären Computer 7. In einer vorteilhaften Ausführung werden Überprüfung der Zugriffsberechtigung und Synchronisation der Daten gemeinsam durchgeführt. Ein Benutzer, der sich gegenüber dem stationären Computer 7 bereits autorisiert hat, kann diese Autorisierung nachfolgend auch für das mobile elektronische Gerät 1 verwenden. Im Falle des Vorhandenseins eines Mehrbenutzersystems sowohl auf Seiten des mobilen elektronischen Gerätes 1 als auf Seiten des stationären Computers 7, kann die Benutzerkennung und gegebenenfalls das Benutzerpasswort in dem Freischaltkode untergebracht werden. Eine zusätzliche Eingabe einer Kennung oder eines Passwortes ist nicht mehr erforderlich. Gleichzeitig werden die Daten des mobilen elektronischen Gerätes 1 auf den neuesten Stand gebracht. Gegenüber einer separaten Autorisierung des Benutzers gegenüber des mobilen elektronischen Gerätes 1 und einer nachfolgenden Synchronisierung der darauf enthaltenen Daten führt das beschriebene Verfahren zu einem erheblichen Komfortgewinn für den Benutzer.

Gemäß Figur 4 werden in einer Weiterbildung der Erfindung von einem Zusatzgerät 7, hier wieder in Form eines stationären Computers, gültige Freischaltkodes 10 für das mobile elektronische Gerät 1 auf ein wechselbares Speichermedium 11 geschrieben. Im Ausführungsbeispiel wird als wechselbares Speichermedium 11 eine Speicherkarte verwendet, die in ein Schreib-/Lesegerät 12 des Zusatzgerätes 7 eingeführt wird. Das Speichermedium 11 kann mehrere Freischaltkodes 10 enthalten. Beim Einsetzen des Speichermediums 11 in ein Schreib-/Lesegerät 13 des mobilen elektronischen Gerätes 1 prüft dieses, ob einer der Kodes 10 Gültigkeit zur Freischaltung besitzt. Dies kann zum Bespiel durch den Vergleich einer im Freischaltkode kodierten Identität des erzeugenden Zusatzgerätes 7 mit einer im mobilen Gerät gespeicherten Identität erfolgen, oder durch Überprüfung vom kodierten Informationen über den Gültigkeitszeitraum des Freischaltkodes 10. Wird ein gültiger Freischaltkode 10 auf dem Speichermedium 11 gefunden, wird die Zeituhr 3 der Zugriffskontrolle 2 auf den vorbestimmten Wert zurückgesetzt. Das mobile elektronische Gerät 1 fordert anschließend den Benutzer durch Anzeige einer entsprechenden Meldung auf, das Speichermedium 11 wieder aus dem Schreib-/Lesegerät 13 zu entnehmen. Hiernach wird die Kontrolle an eine eventuell vorhanden Schutzfunktion 8 übertragen und nach deren Überwindung die Sperre des geschützten Bereiches 4 aufgehoben. Wie zuvor werden spätestens beim Erreichen der vorbestimmten Zeit alle Zugriffe auf den geschützten Bereich 4 gesperrt, wenn zwischenzeitlich keine erneute Überprüfung der Zugangsberechtigung stattgefunden hat. Der Benutzer des Gerätes 1 wird dann durch eine entsprechende Warnmeldung auf dem Bildschirm 6 darauf hingewiesen, dass eine erneute Überprüfung der Zugangsberechtigung mittels des Zusatzgerätes 7 oder des Speichermediums 11 vor dem Zugriff auf den geschützten Bereich 4 nötig ist.

Zur Erhöhung der Schutzwirkung ist es dabei vorteilhaft, wenn jeder Freischaltkode 10 nur für eine einmalige Autorisierung gültig ist. Des weiteren ist vorteilhaft, wenn jeder Freischaltkode 10 nur für einen vorbestimmten Zeitraum Gültigkeit besitzt. In diesem Fall kann bei geplanter Abwesenheit von dem Zusatzgerät 7 ein Speichermedium 11 vorbereitet werden, das beispielsweise für jeden Tag der Abwesenheit einen gültigen Freischaltkode 10 enthält. Jeder dieser Freischaltkodes 10 ist dabei nur einmal und nur innerhalb eines vorbestimmten Zeitraumes gültig. Somit ist das mobile elektronische Gerät 1 auch bei gleichzeitigem Verlust des Gerätes 1 und der Speicherkarte 11 nur sehr eingeschränkt nutzbar, was es insbesondere unattraktiv für einen potentiellen Dieb macht.

Vor einer geplanten Abwesenheit wird ein Speichermedium 11 mit der benötigten Anzahl von Freischaltkodes 10 und zugehörigen Gültigkeitszeiträumen vorbereitet. Vorteilhafterweise verschlüsselt das Zusatzgerät 7 die dafür erzeugten Freischaltkodes 10 mit der eindeutigen Kennung 14 des Gerätes 1. Während der Abwesenheitsphase wird jeweils ein Freischaltkode 10 von dem wechselbaren Speichermedium 11 in das mobile Gerät 1 eingelesen und zur Überprüfung der Berechtigung verwendet. Der verwendete Freischaltkode 10 kann hiernach durch das Zugriffskontrollmittel 2 als verbraucht und damit für eine weitere Überprüfung ungültig gekennzeichnet werden. Nach diesem Vorgang wird das wechselbare Speichermedium 11 aus dem Schreib-/Lesegerät 13 entnommen und an einem sicheren Ort aufbewahrt. Nach Ablauf der vorbestimmten Freischaltzeit wird der Vorgang wiederholt.

Alternative Ausführungsformen des erfindungsgemäßen elektronischen Gerätes 1 können zum Beispiel die Netzwerkkennung, oder die Kennung vorbestimmter Server-Computer in einem lokalen Netzwerk zur Berechtigungsüberprüfung verwenden. Der sich daraus ergebende Vorteil besteht darin, dass bei einer solchen Anordnung die Überprüfung der Zugriffsberechtigung auf ein mobiles Gerät 1 im gesamten Bereich des lokalen Netzwerkes geschehen kann, beispielsweise durch ein lokales Firmennetzwerk. Im Falle eines lokalen Funknetzwerkes bleibt das mobile Gerät 1 beispielsweise innerhalb des Firmengebäudes unbeschränkt einsetzbar, da hier bei jedem Zugriff auf das Netzwerk eine automatische Überprüfung der Zugangsberechtigung erfolgen kann. Wird das Gerät jedoch aus der Firma, und damit aus dem Funkbereich des Firmennetzwerkes entfernt, kann der Zugriff auf das Gerät 1 selber oder unternehmenskritische Daten im geschützten Bereich 4 unterbunden werden. Dies macht zum Beispiel den Diebstahl elektronischer Geräte durch Firmenangehörige unattraktiv. Zusätzlich kann eine eindeutige Kennung 14 eines als gestohlen gemeldeten mobilen Gerätes 1, dann auf eine Sperrliste, die von einem zentralen Rechner des Netzwerkes verwaltet wird, eingetragen werden. Damit kann eine zukünftige Autorisierung auch dann ausgeschlossen werden, wenn sich das mobile Gerät 1 erneut Zugang zu dem lokalen Netzwerk verschafft.

Eine Unterbringung des Zugriffskontrollmittels 2 in einem unveränderlichen Teil des Geräte-BIOS verhindert die Überwindung des Zugriffskontrollmittels 2 durch Neuinstallation der Betriebssystem-Software. In diesem Fall wird das mobile elektronische Gerät 1 wertlos ohne den gleichzeitigen Zugang zu dem Zusatzgerät 7. Diese Konstellation ist daher besonders geeignet für die Ausgestaltung eines Diebstahlschutzes.

Die Unterbringung des Zugriffskontrollmittels 2 in der Betriebssystem-Software des Gerätes 1 erlaubt die nachträgliche Änderung des verwendeten Autorisierungsmechanismus nach erfolgter Benutzerberechtigung. Dies ermöglicht beispielsweise eine nachträgliche Integration des erfindungsgemäßen Zugriffsschutz in ein bereits vorhandenes mobiles elektronisches Gerät 1. Die Zugriffsschutzfunktion kann hier durch Neuinstallation der Betriebssystem-Software eventuell umgangen werden. Jedoch gehen bei einem solchen Vorgehen, zum Beispiel dem "Flashen" des Speichers des mobilen elektronischen Gerätes 1, auch alle gespeicherten Daten und Programme des mobilen Gerätes 1 verloren. Diese Konstellation bietet daher immer noch einen Schutz vor unberechtigtem Zugriff auf wichtige Daten, die in dem geschützten Bereich 4 des mobilen elektronischen Gerät 1 gespeichert sind.

Eine Zuordnung eines mobilen elektronischen Gerätes 1 zu einem Zusatzgerät 7 kann dabei auf unterschiedliche Weise vorgenommen werden. Zum Beispiel kann eine Zuordnung durch die Eingabe gleicher Passworte sowohl an dem Zusatzgerät 7 als auch dem mobilen Gerät 1 vorgenommen werden. Dabei wird ein auf dem mobilen Gerät 1 eingegebenes Passwort zur späteren Autorisierung in einem nichtflüchtigen Speicher des mobilen Gerätes 1 gespeichert und bei der ersten Autorisierungsanforderung an das Zusatzgerät 7 übertragen. Hat sich der Nutzer am Zusatzgerät 7 mit dem gleichen Passwort autorisiert, wird ein Freischaltkode 10 an das mobile Gerät 1 übermittelt. Ein solcher Zuordnungsvorgang kann auf jedem mobilen elektronischen Gerät 1 verwirklicht werden, der die Eingabe eines Passwortes zur Autorisierung vorsieht. Problematisch ist dabei, dass das Passwort des Benutzers für das Zuatzgerät 7 unverschlüsselt im mobilen elektronischen Gerät 1 gespeichert ist.

Zur Verbesserung des vorgenannten Verfahrens zur Zuordnung eines mobilen elektronischen Gerätes 1 zu einem Zusatzgerät 7, kann das auf dem mobilen Gerät 1 eingegebene Passwort mit Hilfe der eindeutigen Kennung 14 des mobilen Gerätes 1 verschlüsselt werden. Während der Autorisierung überträgt das mobile Gerät.1 das verschlüsselte Passwort sowie seine unverschlüsselte Gerätekennung 14 an das Zusatzgerät 7. Der Benutzer muss sich dabei wie zuvor mittels des gleichen Passwortes am Zusatzgerät 7 angemeldet haben. Das Zusatzgerät 7 kann nun das lokal eingegebene Passwort mit der empfangenen Kennung 14 des mobilen Gerätes 1 verschlüsseln und anschließend das lokal verschlüsselte Passwort mit dem empfangenen, verschlüsselten Passwort vergleichen. Stimmen sie überein, wird ein Freischaltkode 10 mit der Gerätekennung 14 des mobilen Gerätes 1 verschlüsselt und zum mobilen Gerät 1 übertragen. Bei Einsatz dieses Verfahrens werden keine Passworte unverschlüsselt abgelegt. Dadurch erhöht sich insbesondere die Sicherheit für ein passwortgeschütztes Zusatzgerät 7.

Vorteilhafterweise findet der Zuordnungsprozess schon vor dem Verkauf von Systemen statt, deren Einzelgeräte nach dem Verkauf zusammenarbeiten sollen. Aber auch eine nachträgliche Zuordnung kann vom Gerätehersteller vorgesehen werden, beispielsweise für eine Neuzuordnung nach einem Verkauf des mobilen elektronischen Gerätes 1.

### Bezugszeichenliste

- 1: Mobiles elektronisches Gerät
- 2: Zugriffskontrollmittel
- 3: Zeituhr
- 4: Geschützter Bereich
- 5: Ungeschützter Bereich
- 6: Ein- und Ausgabe-Komponenten
- 7: Zusatzgerät
- 8: Dockingstation
- 9: Freischaltkode
- 10: Wechselbares Speichermedium
- 11: Schreib-/Lesegerät (des Zusatzgerätes)
- 12: Schreib-/Lesegerät (des mobilen elektronischen Gerätes)
- 13: Geräte-interne Schutzfunktion
- 14: Eindeutige Gerätekennung

## Patentansprüche

1. Mobiles elektronisches Gerät (1) mit einem Zugriffsschutz (2) zur zumindest teilweisen Sperre des Geräts (1), der **dadurch** gebildet ist, dass nach einer Überprüfung der Berechtigung eines Benutzers der Zugriff auf vorbestimmte Teile (4) des Geräts (1) für eine vorbestimmte Zeit freigeschaltet wird und nach Ablauf der vorbestimmten Zeit der Zugriff auf die vorbestimmten Teile (4) des Gerätes (1) automatisch gesperrt wird,
**dadurch gekennzeichnet, dass**
die Überprüfung der Berechtigung eines Benutzers unter Zusammenwirkung des mobilen Geräts (1) mit einem Zusatzgerät (7) erfolgt.

2. Mobiles elektronisches Gerät (1) nach Anspruch 1,
**dadurch gekennzeichnet, dass**
es sich bei dem Zusatzgerät (7) um ein stationäres Gerät handelt.

3. Mobiles elektronisches Gerät nach einem der Ansprüche 1 oder 2, **dadurch gekennzeichnet, dass**
die Freischaltung durch Übermittlung eines Freischaltkodes (10) vom Zusatzgerät (7) erfolgt.

4. Mobiles elektronisches Gerät (1) nach einem der Ansprüche 2 oder 3, **dadurch gekennzeichnet, dass**
das Zusatzgerät (7) ein stationärer Rechner mit einer angeschlossenen Dockingstation (9) für das mobile Gerät (1) ist.

5. Mobiles elektronisches Gerät (1) nach Anspruch 3, **dadurch gekennzeichnet, dass**
das Zusatzgerät (7) dazu eingerichtet ist, zum Schreiben zumindest eines Freischaltkodes (10) mit einem wechselbaren Speichermedium (11) zusammenzuwirken,
und dass das mobile Gerät (1) dazu eingerichtet ist, zum Einlesen eines Freischaltkodes (10) mit dem wechselbaren Speichermedium (11) zusammenzuwirken.

6. Mobiles elektronisches Gerät (1) nach Anspruch 5,
**dadurch gekennzeichnet, dass**
das wechselbare Speichermedium (11) eine Chipkarte ist.

7. Mobiles elektronisches Gerät (1) nach einem der Ansprüche 5 oder 6, **dadurch gekennzeichnet, dass**
der Freischaltkode (10) nur einmal verwendet werden kann.

8. Mobiles elektronisches Gerät (1) nach einem der Ansprüche 5 bis 7, **dadurch gekennzeichnet, dass**
der Freischaltkode (10) nur in einem vorbestimmten Zeitraum Gültigkeit besitzt.

9. Mobiles elektronisches Gerät (1) nach Anspruch 3,
**dadurch gekennzeichnet, dass**
der Freischaltkode (10) durch ein lokales Netzwerk zur Verfügung gestellt wird.

10. Mobiles elektronisches Gerät (1) nach Anspruch 9, **dadurch gekennzeichnet, dass**
das lokale Netzwerk ein Segment eines kabelgebundenen Netzwerks ist.

11. Mobiles elektronisches Gerät nach Anspruch 9,
**dadurch gekennzeichnet, dass**
das lokale Netzwerk eine Zelle eines Funknetzwerks ist.

12. Mobiles elektronisches Gerät (1) nach einem der Ansprüche 3 bis 11, **dadurch gekennzeichnet, dass**
ein Freischaltkode (10) aus einer Gruppe vorbestimmter Freischaltkodes zur Freischaltung verwendet werden kann.

13. Mobiles elektronisches Gerät (1) nach Anspruch 12,
**dadurch gekennzeichnet, dass**
der verwendete Freischaltkode (10) zur Freischaltung und zur Benutzererkennung verwendet wird.

14. Mobiles elektronisches Gerät (1) nach einem der Ansprüche 3 bis 13, **dadurch gekennzeichnet, dass**
der Freischaltkode (10) mit einer eindeutigen Kennung (14) des mobilen elektronischen Gerätes (1) verschlüsselt ist.

15. Mobiles elektronisches Gerät (1) nach einem der Ansprüche 1 bis 14, **dadurch gekennzeichnet, dass**
der Zugriffsschutz (2) das mobile Gerät (1) gegen jedwede Benutzung sperrt.

16. Mobiles elektronisches Gerät (1) nach einem der Ansprüche 1 bis 14, **dadurch gekennzeichnet, dass**
der Zugriffsschutz (2) die Ausführung vorbestimmter Programme verhindert.

17. Mobiles elektronisches Gerät (1) nach einem der Ansprüche 1 bis 14, **dadurch gekennzeichnet, dass**
der Zugriffsschutz (2) den Zugriff auf vorbestimmte Daten verhindert.

18. Mobiles elektronisches Gerät (1) nach einem der Ansprüche 1 bis 17, **dadurch gekennzeichnet, dass** der Zugriffsschutz (2) in das BIOS des Gerätes (1) integriert ist.

19. Mobiles elektronisches Gerät (1) nach einem der Ansprüche 1 bis 17, **dadurch gekennzeichnet, dass**
der Zugriffsschutz (2) in der Betriebssystemsoftware des Gerätes (1) integriert ist.

20. Verfahren zum Schützen eines Geräts (1) vor einem unbefugten Zugriff durch Sperre vorbestimmte Teile (4) des Gerätes (1), die nach Überprüfung der Berechtigung eines Benutzers für eine vorbestimmte Zeit aufgehoben wird und nach Ablauf der vorbestimmten Zeit wieder gesperrt wird, **dadurch gekennzeichnet, dass**
die Überprüfung der Berechtigung eines Benutzers unter Zusammenwirkung des Geräts (1) mit einem externen Zusatzgerät (7) erfolgt.

21. Verfahren nach Anspruch 20,
**dadurch gekennzeichnet, dass**
- zumindest ein Freischaltkode (10) von dem Zusatzgerät (7) auf einem wechselbaren Speichermedium (11) gespeichert wird und
- das Gerät (1) bei der Überprüfung der Berechtigung einen Freischaltkode (10) von dem wechselbaren Speichermedium (11) einliest.

22. Verfahren zur Zuordnung eines mobilen elektronischen Gerätes (1) zu einem Zusatzgerät (7), das die folgenden Schritte aufweist:
(a) Eingabe eines Passwortes an dem mobilen elektronischen Gerät (1),
(b) Speicherung des eingegebenen Passwortes in einem nichtflüchtigen Speicher des mobilen Gerätes (1),
(c) Übertragung des gespeicherten Passwortes von dem mobilen elektronischen Gerät (1) an das Zusatzgerät (7),
(d) Eingabe eines Passwortes an dem Zusatzgerät (7),
(e) Vergleich des übertragenen Passwortes mit dem lokal eingegebenen Passwort,
(f) Übertragung eines Freischaltkodes (10) vom Zusatzgerät (7) an das mobile elektronische Gerät (1), falls die Passworte übereinstimmen.

23. Verfahren nach Anspruch 22, **dadurch gekennzeichnet, dass**
- das im Schritt (a) eingegebene Passwort mit Hilfe der Gerätekennung (14) verschlüsselt wird, und
- im Schritt (c) zusätzlich die Gerätekennung (14) übertragen wird, und
- das im Schritt (d) eingegebene Passwort mit Hilfe der übertragenen Gerätekennung (14) verschlüsselt wird, und
- der im Schritt (f) übertragene Freischaltcode mit der Gerätekennung (14) des mobilen Gerätes (1) verschlüsselt wird.
